# EUROPEAN PATENT APPLICATION

(11) **EP 4 468 218 A1**
(43) Date of publication of application: **27.11.2024**
(21) Application number: 24174821.9
(22) Date of filing: 08.05.2024
(51) Int. Cl.: G06Q 10/06

(54) **SYSTEMS AND METHODS FOR TAIL-SPECIFIC AIRCRAFT FUEL CONSUMPTION MODEL GENERATION**

(30) Priority: 22.05.2023 US 202318321145
(71) Applicant: The Boeing Company, Arlington, VA 22202 (US)
(72) Inventor: NARASIMHULU, Veeresh Kumar Masaru, Arlington, 22202 (US); JAGADEESH, Chaitra, Arlington, 22202 (US)
(74) Representative: St Clair Jones, Gregory Arthur Langley

(57) **Abstract**

Systems and methods for tail-specific aircraft fuel consumption model generation include receiving a plurality of ACARS data packages that include a gross weight value for an aircraft; generating a first fuel flow estimate based at least on a comparison of a plurality of gross weight values for the aircraft; generating training data based on the plurality of ACARS data packages; providing the training data as input to a machine learning model to generate a second fuel flow estimate; comparing the first and second fuel flow estimates to generate a fuel flow error value; and modifying the machine learning model to reduce the fuel flow error value.

## Description

### FIELD OF THE DISCLOSURE

The subject disclosure is generally related to systems and methods for tail-specific aircraft fuel consumption model generation.

### BACKGROUND

With ever increasing air traffic the impact of new procedures and routes need to be carefully analyzed both in terms of network effect and impact on environment. Models of the aircraft and aircraft fuel consumption are important tools used for such analysis. Availability of such models can be limited due to, among other factors, the proprietary nature of the data on which the models are based, as well as the accuracy of and access to that data. Decisions based on inaccurate models can have implications on the accuracy of data-driven decision making.

For example, flight specific data is not publicly available to build accurate models of each individual aircraft or "tail." Without sufficiently accurate data the reliability of traffic management analysis or tail performance monitoring is insufficient. As a further example, aircraft fuel consumption is tail-specific, so non-tail-specific models may provide less accurate estimates than tail-specific models.

### SUMMARY

In a particular implementation, a method includes receiving a plurality of Aircraft Communication Addressing and Reporting System ("ACARS") data packages that include a gross weight value for an aircraft. The method also includes generating a first fuel flow estimate based at least on a comparison of a plurality of gross weight values for the aircraft. The method also includes generating training data based on the plurality of ACARS data packages. The method also includes providing the training data as input to a machine learning model to generate a second fuel flow estimate. The method also includes comparing the first and second fuel flow estimates to generate a fuel flow error value. The method also includes modifying the machine learning model to reduce the fuel flow error value.

In another particular implementation, a system includes a memory configured to store instructions, and one or more processors coupled to the memory. The one or more processors are configured to receive a plurality of Aircraft Communication Addressing and Reporting System ("ACARS") data packages that include a gross weight value for an aircraft. The one or more processors are also configured to generate a first fuel flow estimate based at least on a comparison of a plurality of gross weight values for the aircraft. The one or more processors are also configured to generate training data based on the plurality of ACARS data packages. The one or more processors are also configured to provide the training data as input to a machine learning model to generate a second fuel flow estimate. The one or more processors are also configured to compare the first and second fuel flow estimates to generate a fuel flow error value. The one or more processors are also configured to modify the machine learning model to reduce the fuel flow error value.

In another particular implementation, a (optionally non-transient) computer-readable medium stores instructions that, when executed by one or more processors, cause the one or more processors to initiate, perform, or control operations including receiving a plurality of Aircraft Communication Addressing and Reporting System ("ACARS") data packages that include a gross weight value for an aircraft. The operations also include generating a first fuel flow estimate based at least on a comparison of a plurality of gross weight values for the aircraft. The operations also include generating training data based on the plurality of ACARS data packages. The operations also include providing the training data as input to a machine learning model to generate a second fuel flow estimate. The operations also include comparing the first and second fuel flow estimates to generate a fuel flow error value. The operations also include modifying the machine learning model to reduce the fuel flow error value.

In another particular implementation, a device includes means for receiving a plurality of Aircraft Communication Addressing and Reporting System ("ACARS") data packages that include a gross weight value for an aircraft. The device also includes generating a first fuel flow estimate based at least on a comparison of a plurality of gross weight values for the aircraft. The device also includes generating training data based on the plurality of ACARS data packages. The device also includes providing the training data as input to a machine learning model to generate a second fuel flow estimate. The device also includes comparing the first and second fuel flow estimates to generate a fuel flow error value. The device also includes modifying the machine learning model to reduce the fuel flow error value.

The features, functions, and advantages described herein can be achieved independently in various implementations or can be combined in yet other implementations, further details of which can be found with reference to the following description and drawings.

### BRIEF DESCRIPTION OF THE DRAWINGS

FIG. 1 depicts an example system for tail-specific aircraft fuel consumption model generation, in accordance with some examples of the subject disclosure.
FIG. 2 is a flow chart of an example method for tail-specific aircraft fuel consumption model generation, in accordance with some examples of the subject disclosure.
FIG. 3 is a block diagram of a computing environment including a computing device configured to support aspects of computer-implemented methods and computer-executable program instructions (or code), in accordance with some examples of the subject disclosure.

### DETAILED DESCRIPTION

Availability of accurate, tail-specific fuel consumption models for aircraft can be limited due to, among other factors, the proprietary nature of the data on which the models are based, as well as the lack of tail-specific models available. The systems and methods of the subject disclosure leverage the existing ACARS system and the data exchanged via that system. In a particular aspect, data to build accurate, current tail-specific performance models can be extracted from the ACARS data .

ACARS is a digital communication system used in the airline industry to transmit and receive messages between aircraft and ground stations. The system uses radio and satellite technology for communication in a wide range of operations, including flight tracking, maintenance reporting, weather monitoring, and communication with air traffic control. ACARS data typically includes information about the aircraft's location, altitude, airspeed, fuel levels, engine performance, and other parameters. ACARS data is transmitted in real time to the airline's operations center, where it can be used to monitor the status of the aircraft and make informed decisions about flight operations.

ACARS provides real-time information that can be used to improve safety, efficiency, and reliability through incident risk reduction, fuel consumption and optimization, better maintenance scheduling, and passenger experience. Airlines can use ACARS data to make these decision in a data-driven manner using non-proprietary data.

ACARS data does not typically indicate fuel flow onboard an aircraft in flight. However, ACARS data does typically indicate a gross weight value for the aircraft, and that gross weight value is generally updated throughout the flight. Thus, ACARS data for a flight may include a pre-takeoff weight estimate, a set of inflight weight estimates, and a post-flight weight estimate. The pre-flight weight estimate is usually based on a base weight of the aircraft (which itself may be an estimate) and estimates of weights of cargo, passengers, fuel, etc. loaded onto the aircraft for the flight. Such estimates are often based on, for example, a count of passengers and a default value of an average passenger weight, a count of baggage and a default value of an average (or maximum) baggage weight, and so forth. Thus, the pre-flight weight estimate is not expected to be extremely accurate. Inflight and post-flight weights are estimates based on how much the aircraft's weight is expected to have changed since the pre-flight weight estimate. Thus, inaccuracies present in the pre-flight weight estimate are also present in the inflight and post-flight weight estimates. Nevertheless, differences between the pre-flight weight estimate and the inflight and/or post-flight weight estimates are useful because, typically, the only weight changes for the aircraft after takeoff are due to fuel consumption, and such weight changes are reflected in ACARS data. Thus, the difference between the pre-flight weight estimate of an aircraft and the post-flight weight estimate for the aircraft is indicative of the weight of fuel consumed during the flight, as measured by systems onboard the aircraft. Thus, ACARS data can be used to determine measured, tail-specific fuel consumption for any flight, enabling generation of accurate training data for tail-specific aircraft performance models using readily available data.

A technical advantage of the subject disclosure is the ability to use machine learning to leverage non-proprietary information to generate tail-specific computer models of fuel consumption for use in the airline industry. The tail-specific models can be used in a plethora of data-driven decision-making processes such as improved aircraft maintenance and fuel consumption optimization.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

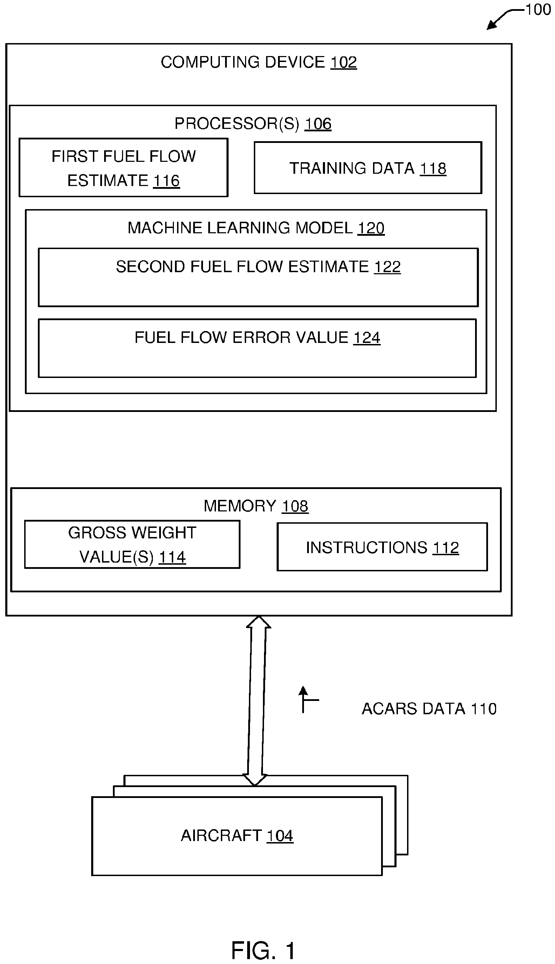

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

As used herein, the term "machine learning" should be understood to have any of its usual and customary meanings within the fields of computers science and data science, such meanings including, for example, processes or techniques by which one or more computers can learn to perform some operation or function without being explicitly programmed to do so. As a typical example, machine learning can be used to enable one or more computers to analyze data to identify patterns in data and generate a result based on the analysis. For certain types of machine learning, the results that are generated include data that indicates an underlying structure or pattern of the data itself. Such techniques, for example, include so called "clustering" techniques, which identify clusters (e.g., groupings of data elements of the data).

For certain types of machine learning, the results that are generated include a data model (also referred to as a "machine-learning model" or simply a "model"). Typically, a model is generated using a first data set to facilitate analysis of a second data set. For example, a first portion of a large body of data may be used to generate a model that can be used to analyze the remaining portion of the large body of data. As another example, a set of historical data can be used to generate a model that can be used to analyze future data.

Since a model can be used to evaluate a set of data that is distinct from the data used to generate the model, the model can be viewed as a type of software (e.g., instructions, parameters, or both) that is automatically generated by the computer(s) during the machine learning process. As such, the model can be portable (e.g., can be generated at a first computer, and subsequently moved to a second computer for further training, for use, or both). Additionally, a model can be used in combination with one or more other models to perform a desired analysis. To illustrate, first data can be provided as input to a first model to generate first model output data, which can be provided (alone, with the first data, or with other data) as input to a second model to generate second model output data indicating a result of a desired analysis. Depending on the analysis and data involved, different combinations of models may be used to generate such results. In some examples, multiple models may provide model output that is input to a single model. In some examples, a single model provides model output to multiple models as input.

Examples of machine-learning models include, without limitation, perceptrons, neural networks, support vector machines, regression models, decision trees, Bayesian models, Boltzmann machines, adaptive neuro-fuzzy inference systems, as well as combinations, ensembles and variants of these and other types of models. Variants of neural networks include, for example and without limitation, prototypical networks, autoencoders, transformers, self-attention networks, convolutional neural networks, deep neural networks, deep belief networks, etc. Variants of decision trees include, for example and without limitation, random forests, boosted decision trees, etc.

Since machine-learning models are generated by computer(s) based on input data, machine-learning models can be discussed in terms of at least two distinct time windows - a creation/training phase and a runtime phase. During the creation/training phase, a model is created, trained, adapted, validated, or otherwise configured by the computer based on the input data (which in the creation/training phase, is generally referred to as "training data"). Note that the trained model corresponds to software that has been generated and/or refined during the creation/training phase to perform particular operations, such as classification, prediction, encoding, or other data analysis or data synthesis operations. During the runtime phase (or "inference" phase), the model is used to analyze input data to generate model output. The content of the model output depends on the type of model. For example, a model can be trained to perform classification tasks or regression tasks, as non-limiting examples. In some implementations, a model may be continuously, periodically, or occasionally updated, in which case training time and runtime may be interleaved or one version of the model can be used for inference while a copy is updated, after which the updated copy may be deployed for inference.

In some implementations, a previously generated model is trained (or re-trained) using a machine-learning technique. In this context, "training" refers to adapting the model or parameters of the model to a particular data set. Unless otherwise clear from the specific context, the term "training" as used herein includes "re-training" or refining a model for a specific data set. For example, training may include so called "transfer learning." In transfer learning a base model may be trained using a generic or typical data set, and the base model may be subsequently refined (e.g., re-trained or further trained) using a more specific data set.

A data set used during training is referred to as a "training data set" or simply "training data". The data set may be labeled or unlabeled. "Labeled data" refers to data that has been assigned a categorical label indicating a group or category with which the data is associated, and "unlabeled data" refers to data that is not labeled. Typically, "supervised machine-learning processes" use labeled data to train a machine-learning model, and "unsupervised machine-learning processes" use unlabeled data to train a machine-learning model; however, it should be understood that a label associated with data is itself merely another data element that can be used in any appropriate machine-learning process. To illustrate, many clustering operations can operate using unlabeled data; however, such a clustering operation can use labeled data by ignoring labels assigned to data or by treating the labels the same as other data elements.

Training a model based on a training data set generally involves changing parameters of the model with a goal of causing the output of the model to have particular characteristics based on data input to the model. To distinguish from model generation operations, model training may be referred to herein as optimization or optimization training. In this context, "optimization" refers to improving a metric, and does not mean finding an ideal (e.g., global maximum or global minimum) value of the metric. Examples of optimization trainers include, without limitation, backpropagation trainers, derivative free optimizers (DFOs), and extreme learning machines (ELMs). As one example of training a model, during supervised training of a neural network, an input data sample is associated with a label. When the input data sample is provided to the model, the model generates output data, which is compared to the label associated with the input data sample to generate an error value. Parameters of the model are modified in an attempt to reduce (e.g., optimize) the error value. As another example of training a model, during unsupervised training of an autoencoder, a data sample is provided as input to the autoencoder, and the autoencoder reduces the dimensionality of the data sample (which is a lossy operation) and attempts to reconstruct the data sample as output data. In this example, the output data is compared to the input data sample to generate a reconstruction loss, and parameters of the autoencoder are modified in an attempt to reduce (e.g., optimize) the reconstruction loss.

FIG. 1 depicts an example system 100 for tail-specific aircraft fuel consumption model generation, in accordance with some examples of the subject disclosure. In some implementations, the system 100 includes a computing device 102 configured to communicate with one or more aircraft 104. The computing device 102 can include one or more processors 106 coupled to a memory 108 that includes instructions 112 that, when executed by the processor(s) 106, cause the processor(s) 106 to execute certain functions such as those detailed below. The computing device 102 is configured to receive ACARS data 110 generated by aircraft 104. The aircraft 104 can be any suitable aircraft configured to transmit ACARS data packages to an associated ground station or other appropriate receiver.

In some implementations, the computing device 102 can receive the ACARS data 110 from a wireless communication from the aircraft 104. For example, one or more of the aircraft 104 can communicate ACARS data packages to the computing device 102 via a short burst data transmission via one or more satellites. In the same or alternative implementations, the computing device can receive the ACARS data 110 from a ground station configured to receive the ACARS data 110 from one or more of the aircraft 104 via a wireless communication (e.g., via satellite(s)). In further the same or alternative implementations, the computing device 102 can receive the ACARS data 110 from one or more components of the ground station, another computing device, or any combination thereof.

In some aspects, the ACARS data packages can include flight time data, altitude data, temperature data, location data, or a combination thereof. One particular piece of information included in certain ACARS data packages is data associated with a gross weight value for the particular aircraft 104. The plurality of ACARS data packages received by the computing device 102 as the ACARS data 110 can include one or more ACARS data packages that include a gross weight value for the aircraft 104. In some implementations, the computing device 102 can receive a superset of ACARS data packages and the processor(s) 106 can be configured to determine whether each of the superset of ACARS data packages includes a gross weight value. The processor(s) can be configured to store the gross weight value(s) 114 at the memory 108. In a particular aspect, some ACARS data packages can include fuel flow data and some ACARS data packages do not include fuel flow data.

In some implementations, the processor(s) 106 can be configured to generate a first fuel flow estimate 116 based at least on a comparison of a plurality of gross weight values 114 for the aircraft 104. As noted above, the gross weight value for the aircraft 104 at a particular time can be based on certain assumptions (e.g., passenger weight, luggage weight, etc.). If these assumptions remain constant over time, an estimate of fuel flow can be made based on changes in the gross weight over time. For example, a gross weight value ten minutes after takeoff can be compared to a gross weight at takeoff. Since fuel consumption should be the primary variable in the difference in the two gross weight values, the processor(s) 106 can estimate fuel consumption during that time interval.

In some implementations, the processor(s) 106 can also be configured to generate training data 118 based at least on a comparison of the plurality of gross weight values 114 for the aircraft 104. In some aspects, generating the training data 118 can include removing an ACARS data package from the training data 118 if the ACARS data package does not include a data set required for the training data 118. For example, the machine learning model 120 can include a model for deriving a fuel flow estimate based at least on gross weight, altitude, and flight time. In this example, the processor(s) 106 can be configured to remove from the training data 118 any ACARS data package that does not include all three data values.

The processor(s) 106 can be configured to generate the training data 118 based on the comparison of the plurality of gross weight values 114 for the aircraft 104 in addition to certain other data from the ACARS data 110. For example, the processor(s) 106 can configured to analyze the ACARS data 110 for data associated with flight time, altitude, temperature, position (e.g., latitude and longitude), wind magnitude, wind direction, etc. associated with the particular aircraft 104. In a particular aspect, the processor(s) 106 can be further configured to derive data from the ACARS data 110 for use as training data 118. For example, the processor(s) 106 can derive estimates including the first fuel flow estimate 116, ground speed, resolved winds, true air speed, etc. In other configurations, more, fewer, and/or different data values from the ACARS data 110 can be used to generate the training data 118.

The processor(s) 106 can provide the training data 118 as input to a machine learning model 120 to generate a second fuel flow estimate 122. The processor(s) 106 can be configured to compare the first fuel flow estimate 116 and the second fuel flow estimate 122 to generate a fuel flow error value 124, and to modify the machine learning model 120 to reduce the fuel flow error value 124. In some aspects, the machine learning model 120 is tail-specific. In the same or alternative aspects, the machine learning model 120 is initially aircraft type-specific, generic, or some combination thereof and transfer learning techniques (as described above) are used to update the machine learning model 120 to generate a tail-specific model.

In some aspects, the machine learning model 120 is a neural network. In a particular aspect, modifying the machine learning model 120 can include modifying a network weight associated with one or more nodes of the neural network. In the same or alternative particular aspects, modifying the machine learning model 120 can include back propagation.

In some aspects, the processor(s) 106 can also be configured to, after modifying the machine learning model 120 to reduce the fuel flow error value 124, provide the training data 118 as input to the machine learning model 120 to generate a third fuel flow estimate. As the fuel flow error value 124 decreases to within acceptable bounds, the computing device 102 generally, and output of the machine learning model 120 particularly, can be used to inform data-driven policies governing operation and maintenance of the aircraft 104.

For example, the processor(s) 106 can be configured to generate one or more aircraft traffic management parameters based at least on the third fuel flow estimate. Aircraft traffic management parameters can include parameters associated with routing a particular aircraft 104 along a particular route, ordering aircraft 104 for takeoff and landing, etc. Certain current aircraft management procedures are based on generic aircraft models (e.g., the Base of Aircraft Data ("BADA") models), which are not tail-specific and can be inaccurate.

As an additional example, the processor(s) 106 can be configured to generate one or more fuel planning parameters based at least on the third fuel flow estimate. Fuel planning parameters can include parameters associated with fuel planning for the particular aircraft 104. By having a tail-specific model for fuel consumption, fuel use for the particular aircraft 104 can be more accurately planned. Additionally, performance for a particular aircraft 104 can change over time, resulting in changes to the aircraft's expected fuel consumption in different circumstances. A tail-specific fuel consumption model can be updated throughout the operational lifetime of the aircraft so that the model accounts for such changes.

As a further example, the processor(s) 106 can be configured to generate one or more aircraft maintenance parameters based at least on the third fuel flow estimate. Aircraft maintenance parameters can include parameters associated with certain maintenance tasks for the particular aircraft 104. By monitoring changes in aircraft performance such as changes in fuel consumption over time, the computing device 102 can enable better decision-making regarding aircraft maintenance.

The system 100 can also include components not illustrated in FIG. 1. For example, the computing device 102 can also include a receiver configured to receive the ACARS data 110 from the aircraft 104. The receiver can be configured to receive the data, for example, via a satellite radio frequency. As an additional example, the system 100 can also include one or more input/output interfaces, one or more network interfaces, etc. Further, although FIG. 1 illustrates the memory 108 of the system 100 as storing certain data, more, fewer, and/or different data can be present within the memory 108 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the machine learning model 120, the training data 118, the fuel flow error value 124, the first fuel flow estimate 116, the second fuel flow estimate 122, or some combination thereof. Such component(s) can be located remotely from the computing device 102 and accessed via a modem of the computing device 102.

Further, although FIG. 1 illustrates the computing device 102 and the aircraft 104 as separate, other configurations are possible without departing from the scope of the subject disclosure. For example, the computing device 102 can be integrated into the aircraft 104 (e.g., as onboard model generation). As an additional example, one or more components of the computing device 102 can be distributed across a plurality of computing devices (e.g., a group of servers).

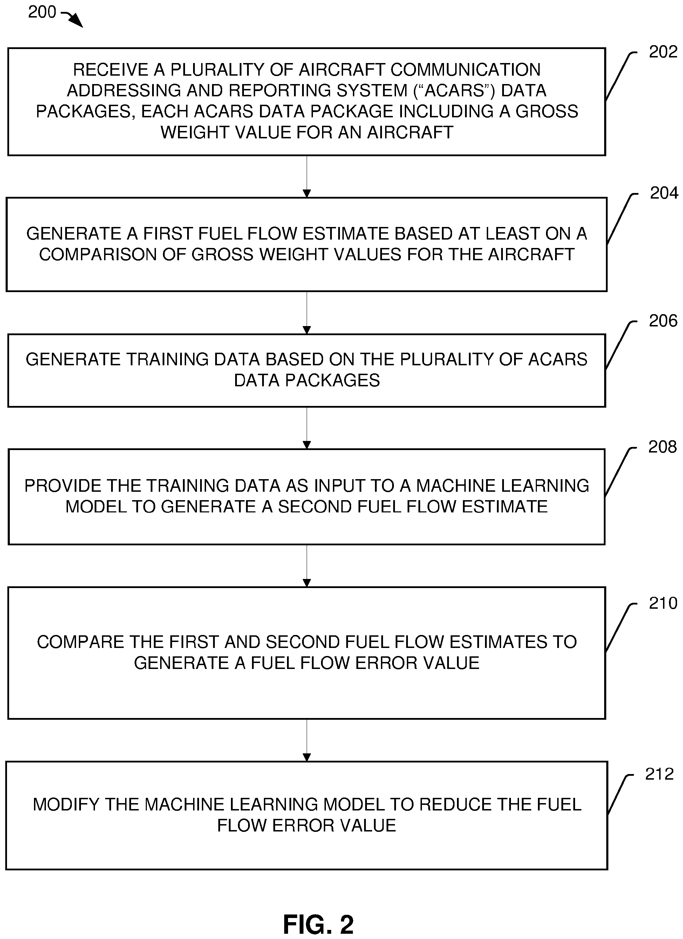

FIG. 2 is a flow chart of an example method 200 for tail-specific aircraft fuel consumption model generation, in accordance with some examples of the subject disclosure. The method 200 can be initiated, performed, or controlled by one or more processors executing instructions, such as by the processor(s) 106 of FIG. 1 executing instructions 112 from the memory 108.

In some implementations, the method 200 includes, at 202, receiving a plurality of Aircraft Communication Addressing and Reporting System ("ACARS") data packages that include a gross weight value for an aircraft. For example, the processor(s) 106 of FIG. 1 can receive the ACARS data 110 including a plurality of ACARS data packages including the gross weight values 114 for the aircraft 104.

In the example of FIG. 2, the method 200 can also include, at 204, generating a first fuel flow estimate based at least on a comparison of a plurality of gross weight values for the aircraft. For example, the processor(s) 106 of FIG. 1 can generate the first fuel flow estimate 116 based at least on a comparison of the plurality of gross weight values 114 for the aircraft 104.

In the example of FIG. 2, the method 200 can also include, at 206, generating training data based on the plurality of ACARS data packages. For example, the processor(s) 106 can generate the training data 118 based on the plurality of ACARS data packages from the ACARS data 110.

In the example of FIG. 2, the method 200 can also include, at 208, providing the training data as input to a machine learning model to generate a second fuel flow estimate. For example, the processor(s) 106 of FIG. 1 can provide the training data 118 as input to the machine learning model 120 to generate the second fuel flow estimate 122.

In the example of FIG. 2, the method 200 can also include, at 210, comparing the first and second fuel flow estimates to generate a fuel flow error value. For example, the processor(s) 106 of FIG. 1 can compare the first fuel flow estimate 116 and the second fuel flow estimate 122 to generate the fuel flow error value 124.

In the example of FIG. 2, the method 200 can also include, at 212, modifying the machine learning model to reduce the fuel flow error value. For example, the processor(s) 106 can be configured to modify the machine learning model 120 to reduce the fuel flow error value 124.

Although the method 200 is illustrated as including a certain number of steps, more, fewer, and/or different steps can be included in the method 200 without departing from the scope of the subject disclosure. For example, the method 200 can vary depending on the count and variety of ACARS data packages received at a particular time, as described in more detail above with reference to FIG. 1. For example, the computing device 100 of FIG. 1 can receive ACARS data packages continuously or occasionally and accumulate the ACARS data packages over some period of time. In this example, the method 200 can be performed when a model update criteria has been satisfied. The model update criteria can be satisfied when a particular duration has elapsed since the most recent model update, based on a quantity of training data available, based on a number of time a particular aircraft has flown, or based on one or more other factors.

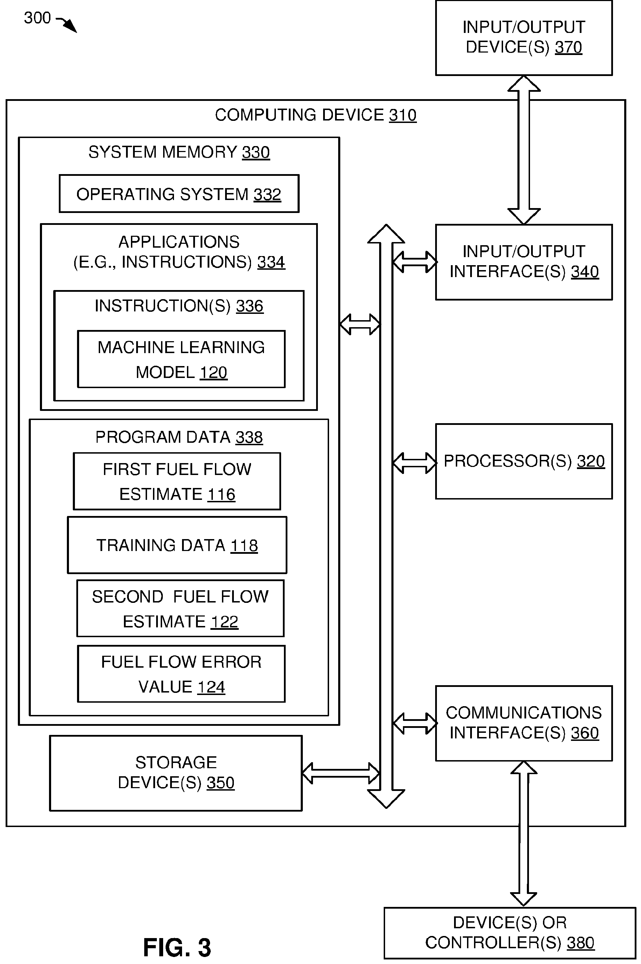

FIG. 3 is a block diagram of a computing environment 300 including a computing device 310 configured to support aspects of computer-implemented methods and computer-executable program instructions (or code), in accordance with some examples of the subject disclosure. For example, the computing device 310, or portions thereof, is configured to execute instructions to initiate, perform, or control one or more operations described in more detail above with reference to FIG. 1 and FIG. 2. In a particular aspect, the computing device 310 can include, correspond to, or be included within the computing device 102, the aircraft 104 of FIG. 1, one or more servers, one or more virtual devices, or a combination thereof.

The computing device 310 includes one or more processors 320. In a particular aspect, the processor(s) 320 correspond to the processor(s) 106 of FIG. 1. The processor(s) 320 are configured to communicate with system memory 330, one or more storage devices 350, one or more input/output interfaces 340, one or more communications interfaces 360, or any combination thereof. The system memory 330 includes volatile memory devices (e.g., random access memory (RAM) devices), nonvolatile memory devices (e.g., read-only memory (ROM) devices, programmable read-only memory, and flash memory), or both. The system memory 330 stores an operating system 332, which can include a basic input/output system for booting the computing device 310 as well as a full operating system to enable the computing device 310 to interact with users, other programs, and other devices. The system memory 330 stores system (program) data 338, such as the instructions 336, the first fuel estimate 116, the training data 118, the second fuel flow estimate 122, the fuel flow error value 124 of FIG. 1, or a combination thereof.

The system memory 330 includes one or more applications 334 (e.g., sets of instructions) executable by the processor(s) 320. As an example, the one or more applications 334 include the instructions 336 executable by the processor(s) 320 to initiate, control, or perform one or more operations described with reference to FIG. 1 and FIG. 2. To illustrate, the one or more applications 334 include the instructions 336 executable by the processor(s) 320 to initiate, control, or perform one or more operations described with reference to receiving the plurality of ACARS data packages in the ACARS data 110, generating the first fuel flow estimate 116, generating the training data 118, providing the training data 118 as input to the machine learning model 120 to generate the second fuel flow estimate 122, comparing the first and second fuel flow estimates 116, 122 to generate the fuel flow error value 124 of FIG. 1, or a combination thereof.

In a particular implementation, the system memory 330 includes a (optionally non-transitory) computer readable medium (e.g., a computer-readable storage device) storing the instructions 336 that, when executed by the processor(s) 320, cause the processor(s) 320 to initiate, perform, or control operations for improving an automated environment for aeronautical information services. The operations include receiving a plurality of ACARS data packages that include a gross weight value for an aircraft. The operations also include generating a first fuel flow estimate based at least on a comparison of a plurality of gross weight values for the aircraft. The operations also include generating training data based on the plurality of ACARS data packages. The operations also include providing the training data as input to a machine learning model to generate a second fuel flow estimate. The operations also include comparing the first and second fuel flow estimates to generate a fuel flow error value. The operations also include modifying the machine learning model to reduce the fuel flow error value.

The one or more storage devices 350 include nonvolatile storage devices, such as magnetic disks, optical disks, or flash memory devices. In a particular example, the storage devices 350 include both removable and non-removable memory devices. The storage devices 350 are configured to store an operating system, images of operating systems, applications (e.g., one or more of the applications 334), and program data (e.g., the program data 338). In a particular aspect, the system memory 330, the storage devices 350, or both, include tangible computer-readable media. In a particular aspect, one or more of the storage devices 350 are external to the computing device 310.

The one or more input/output interfaces 340 enable the computing device 310 to communicate with one or more input/output devices 370 to facilitate user interaction. For example, the one or more input/output interfaces 340 can include a display interface, an input interface, or both. For example, the input/output interface 340 is adapted to receive input from a user, to receive input from another computing device, or a combination thereof. In some implementations, the input/output interface 340 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 370 include one or more user interface devices and displays, including some combination of buttons, keyboards, pointing devices, displays, speakers, microphones, touch screens, and other devices.

The processor(s) 320 are configured to communicate with devices or controllers 380 via the one or more communications interfaces 360. For example, the one or more communications interfaces 360 can include a network interface. The devices or controllers 380 can include, for example, the aircraft 104 of FIG. 1.

In some implementations, a (optionally non-transitory) computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIG. 1 and FIG. 2. In some implementations, part or all of one or more of the operations or methods of FIG. 1 and FIG. 2 can be implemented by one or more processors (e.g., one or more central processing units (CPUs), one or more graphics processing units (GPUs), one or more digital signal processors (DSPs)) executing instructions, by dedicated hardware circuitry, or any combination thereof.

In conjunction with the described implementations, an apparatus includes means for receiving a plurality of Aircraft Communication Addressing and Reporting System ("ACARS") data packages that include a gross weight value for an aircraft. For example, the means for receiving the plurality of ACARS data packages includes the computing device 102, the processor(s) 106 of FIG. 1, one or more other circuits or components configured to receive a plurality of ACARS data packages that include a gross weight value for an aircraft, or any combination thereof.

The device also includes means for generating a first fuel flow estimate based at least on a comparison of a plurality of gross weight values for the aircraft. For example, the means for generating the first fuel flow estimate 116 of FIG. 1 includes the computing device 102, the processor(s) 106 of FIG. 1, one or more other circuits or components configured to generate a first fuel flow estimate based at least on a comparison of a plurality of gross weight values for the aircraft, or any combination thereof.

The device also includes means for generating training data based on the plurality of ACARS data packages. For example, the means for generating the training data 118 of FIG. 1 includes the computing device 102, the processor(s) 106 of FIG. 1, one or more other circuits or components configured to generate training data based on the plurality of ACARS data packages, or any combination thereof.

The device also includes means for providing the training data as input to a machine learning model to generate a second fuel flow estimate. For example, the means for providing the training data 118 as input to the machine learning model 120 of FIG. 1 includes the computing device 102, the processor(s) 106 of FIG. 1, one or more other circuits or components configured to provide the training data as input to a machine learning model to generate a second fuel flow estimate, or any combination thereof.

The device also includes means for comparing the first and second fuel flow estimates to generate a fuel flow error value. For example, the means for comparing the first and second fuel flow estimates 116, 122 of FIG. 1 includes the computing device 102, the processor(s) 106 of FIG. 1, one or more other circuits or components configured to compare the first and second fuel flow estimates to generate a fuel flow error value, or any combination thereof.

The device also includes means for modifying the machine learning model to reduce the fuel flow error value. For example, the means for modifying the machine learning model 120 of FIG. 1 includes the computing device 102, the processor(s) 106 of FIG. 1, one or more other circuits or components configured to modify the machine learning model to reduce the fuel flow error value, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following examples:
According to Example 1, a method includes receiving a plurality of ACARS data packages that include a gross weight value for an aircraft; generating a first fuel flow estimate based at least on a comparison of a plurality of gross weight values for the aircraft; generating training data based on the plurality of ACARS data packages; providing the training data as input to a machine learning model to generate a second fuel flow estimate; comparing the first and second fuel flow estimates to generate a fuel flow error value; and modifying the machine learning model to reduce the fuel flow error value.
Example 2 includes the method of Example 1, wherein the machine learning model is a neural network.
Example 3 includes the method of Example 1 or Example 2, wherein modifying the machine learning model comprises modifying a network weight associated with one or more nodes of the neural network.
Example 4 includes the method of any of Examples 1 to 3, wherein modifying the machine learning model comprises back propagation.
Example 5 includes the method of any of Examples 1 to 4 and further includes, after modifying the machine learning model to reduce the fuel flow error value, providing input to the machine learning model to generate a third fuel flow estimate.
Example 6 includes the method of Example 5 and further includes generating one or more aircraft traffic management parameters based at least on the third fuel flow estimate.
Example 7 includes the method of Example 5 or Example 6 and further includes generating one or more fuel planning parameters based at least on the third fuel flow estimate.
Example 8 includes the method of any of Examples 5 to 7 and further includes generating one or more aircraft maintenance parameters based at least on the third fuel flow estimate.
Example 9 includes the method of any of Examples 1 to 8, wherein the machine learning model is tail-specific.
Example 10 includes the method of any of Examples 1 to 9, wherein the ACARS data package comprises flight time data, altitude data, temperature data, location data, or a combination thereof.
Example 11 includes the method of any of Examples 1 to 10, wherein generating training data comprises removing an ACARS data package from the training data if the ACARS data package does not include a data set required for the training data.
Example 12 includes the method any of Examples 1 to 11 and further includes receiving a superset of ACARS data packages and determining whether each of the superset of ACARS data packages includes the gross weight value.
Example 13 includes the method of any of Examples 1 to 12, wherein the ACARS data packages do not include fuel flow data.
According to Example 14, a device includes means for receiving a plurality of ACARS data packages that include a gross weight value for an aircraft; means for generating a first fuel flow estimate based at least on a comparison of a plurality of gross weight values for the aircraft; means for generating training data based on the plurality of ACARS data packages; means for providing the training data as input to a machine learning model to generate a second fuel flow estimate; means for comparing the first and second fuel flow estimates to generate a fuel flow error value; and means for modifying the machine learning model to reduce the fuel flow error value.
Example 15 includes the device of Example 14, wherein the machine learning model is a neural network.
Example 16 includes the device of Example 14 or Example 15, wherein modifying the machine learning model comprises modifying a network weight associated with one or more nodes of the neural network.
Example 17 includes the device of any of Examples 14 to 16, wherein modifying the machine learning model comprises back propagation.
Example 18 includes the device of any of Examples 14 to 17 and further includes means for providing, after modifying the machine learning model to reduce the fuel flow error value, input to the machine learning model to generate a third fuel flow estimate.
Example 19 includes the device of Example 18 and further includes means for generating one or more aircraft traffic management parameters based at least on the third fuel flow estimate.
Example 20 includes the device of Example 18 or Example 19 and further includes means for generating one or more fuel planning parameters based at least on the third fuel flow estimate.
Example 21 includes the device of any of Examples 18 to 20 and further includes means for generating one or more aircraft maintenance parameters based at least on the third fuel flow estimate.
Example 22 includes the device of any of Examples 14 to 21, wherein the machine learning model is tail-specific.
Example 23 includes the device of any of Examples 14 to 22, wherein the ACARS data package comprises flight time data, altitude data, temperature data, location data, or a combination thereof.
Example 24 includes the device of any of Examples 14 to 23, wherein generating training data comprises removing an ACARS data package from the training data if the ACARS data package does not include a data set required for the training data.
Example 25 includes the device any of Examples 14 to 24 and further includes means for receiving a superset of ACARS data packages and determining whether each of the superset of ACARS data packages includes the gross weight value.
Example 26 includes the device of any of Examples 14 to 25, wherein the ACARS data packages do not include fuel flow data.
According to Example 27, a (optionally non-transient) computer-readable medium storing instructions executable by one or more processors to perform operations that include receiving a plurality of ACARS data packages that include a gross weight value for an aircraft; generating a first fuel flow estimate based at least on a comparison of a plurality of gross weight values for the aircraft; generating training data based on the plurality of ACARS data packages; providing the training data as input to a machine learning model to generate a second fuel flow estimate; comparing the first and second fuel flow estimates to generate a fuel flow error value; and modifying the machine learning model to reduce the fuel flow error value.
Example 28 includes the computer-readable medium of Example 27, wherein the machine learning model is a neural network.
Example 29 includes the computer-readable medium of Example 27 or Example 28, wherein modifying the machine learning model comprises modifying a network weight associated with one or more nodes of the neural network.
Example 30 includes the computer-readable medium of any of Examples 27 to 29, wherein modifying the machine learning model comprises back propagation.
Example 31 includes the computer-readable medium of any of Examples 27 to 30, the operations further including, after modifying the machine learning model to reduce the fuel flow error value, providing input to the machine learning model to generate a third fuel flow estimate.
Example 32 includes the computer-readable medium of Example 31, the operations further comprising generating one or more aircraft traffic management parameters based at least on the third fuel flow estimate.
Example 33 includes the computer-readable medium of Example 31 or Example 32, the operations further comprising generating one or more fuel planning parameters based at least on the third fuel flow estimate.
Example 34 includes the computer-readable medium of any of Examples 31 to 33, the operations further comprising generating one or more aircraft maintenance parameters based at least on the third fuel flow estimate.
Example 35 includes the computer-readable medium of any of Examples 27 to 34, wherein the machine learning model is tail-specific.
Example 36 includes the computer-readable medium of any of Examples 27 to 35, wherein the ACARS data package comprises flight time data, altitude data, temperature data, location data, or a combination thereof.
Example 37 includes the computer-readable medium of any of Examples 27 to 36, wherein generating training data comprises removing an ACARS data package from the training data if the ACARS data package does not include a data set required for the training data.
Example 38 includes the computer-readable medium of any of Examples 27 to 37, the operations further including receiving a superset of ACARS data packages and determining whether each of the superset of ACARS data packages includes the gross weight value.
Example 39 includes the computer-readable medium of any of Examples 27 to 39, wherein the ACARS data packages do not include fuel flow data.
According to Example 40, a system includes a memory configured to store instructions; and one or more processors configured to receive a plurality of ACARS data packages that include a gross weight value for an aircraft; generate a first fuel flow estimate based at least on a comparison of a plurality of gross weight values for the aircraft; generate training data based on the plurality of ACARS data packages; provide the training data as input to a machine learning model to generate a second fuel flow estimate; compare the first and second fuel flow estimates to generate a fuel flow error value; and modify the machine learning model to reduce the fuel flow error value.
Example 41 includes the system of Example 40, wherein the machine learning model is a neural network.
Example 42 includes the system of Example 40 or Example 41, wherein the one or more processors are configured to modify the machine learning model by modifying a network weight associated with one or more nodes of the neural network.
Example 43 includes the system of any of Examples 40 to 42, wherein the one or more processors are configured to modify the machine learning model by back propagation.
Example 44 includes the system of any of Examples 40 to 43, wherein the one or more processors are further configured to, after modifying the machine learning model to reduce the fuel flow error value, provide input to the machine learning model to generate a third fuel flow estimate.
Example 45 includes the system of Example 44, wherein the one or more processors are further configured to generate one or more aircraft traffic management parameters based at least on the third fuel flow estimate.
Example 46 includes the system of Example 44 or Example 45, wherein the one or more processors are further configured to generate one or more fuel planning parameters based at least on the third fuel flow estimate.
Example 47 includes the system of any of Examples 44 to 46, wherein the one or more processors are further configured to generate one or more aircraft maintenance parameters based at least on the third fuel flow estimate.
Example 48 includes the system of any of Examples 40 to 47, wherein the machine learning model is tail-specific.
Example 49 includes the system of any of Examples 40 to 48, wherein the ACARS data package comprises flight time data, altitude data, temperature data, location data, or a combination thereof.
Example 50 includes the system of any of Examples 40 to 49, wherein the one or more processors are configured to generate training data by removing an ACARS data package from the training data if the ACARS data package does not include a data set required for the training data.
Example 51 includes the system of any of Examples 40 to 50, wherein the one or more processors are further configured to receive a superset of ACARS data packages and determining whether each of the superset of ACARS data packages includes the gross weight value.
Example 52 includes the system of any of Examples 40 to 51, wherein the ACARS data packages do not include fuel flow data.

The disclosure includes the following clauses:
1. A system comprising:
   a memory configured to store instructions; and
   one or more processors configured to:
      receive a plurality of Aircraft Communication Addressing and Reporting System ("ACARS") data packages that include a gross weight value for an aircraft;
      generate a first fuel flow estimate based at least on a comparison of a plurality of gross weight values for the aircraft;
      generate training data based on the plurality of ACARS data packages;
      provide the training data as input to a machine learning model to generate a second fuel flow estimate;
      compare the first and second fuel flow estimates to generate a fuel flow error value; and
      modify the machine learning model to reduce the fuel flow error value.
2. The system of clause 1, wherein the machine learning model is a neural network.
3. The system of clause 2, wherein the one or more processors are configured to modify the machine learning model by modifying a network weight associated with one or more nodes of the neural network.
4. The system of clause 2 or clause 3, wherein one or more processors are configured to modify the machine learning model by back propagation.
5. The system of any preceding clause, wherein the one or more processors are further configured to, after modifying the machine learning model to reduce the fuel flow error value, provide the training data as input to the machine learning model to generate a third fuel flow estimate.
6. The system of clause 5, wherein the one or more processors are further configured to generate one or more aircraft traffic management parameters based at least on the third fuel flow estimate.
7. The system of clause 5 or clause 6, wherein the one or more processors are further configured to generate one or more fuel planning parameters based at least on the third fuel flow estimate.
8. The system of any of clauses 5 to 7, wherein the one or more processors are further configured to generate one or more aircraft maintenance parameters based at least on the third fuel flow estimate.
9. The system of any preceding clause, wherein the machine learning model is tail-specific.
10. The system of any preceding clause, wherein the ACARS data package comprises flight time data, altitude data, temperature data, location data, or a combination thereof.
11. The system of any preceding clause, wherein one or more processors are configured to generate training data by removing an ACARS data package from the training data if the ACARS data package does not include a data set required for the training data.
12. The system of any preceding clause, wherein one or more processors are further configured to receive a superset of ACARS data packages and determining whether each of the superset of ACARS data packages includes the gross weight value.
13. The system of any preceding clause, wherein the ACARS data packages do not include fuel flow data.
14. A method comprising:
   receiving a plurality of Aircraft Communication Addressing and Reporting System ("ACARS") data packages that include a gross weight value for an aircraft;
   generating a first fuel flow estimate based at least on a comparison of a plurality of gross weight values for the aircraft;
   generating training data based on the plurality of ACARS data packages;
   providing the training data as input to a machine learning model to generate a second fuel flow estimate;
   comparing the first and second fuel flow estimates to generate a fuel flow error value; and
   modifying the machine learning model to reduce the fuel flow error value.
15. The method of clause 14, further comprising, after modifying the machine learning model to reduce the fuel flow error value, providing the training data as input to the machine learning model to generate a third fuel flow estimate.
16. The method of clause 14 or clause 15, wherein the machine learning model is tail-specific.
17. The method of any of clauses 14 to 16, wherein generating training data comprises removing an ACARS data package from the training data if the ACARS data package does not include a data set required for the training data.
18. The method any of clauses 14 to 17, further comprising receiving a superset of ACARS data packages and determining whether each of the superset of ACARS data packages includes the gross weight value.
19. A non-transient, computer-readable medium storing instructions executable by one or more processors to perform operations that include:
   receiving a plurality of Aircraft Communication Addressing and Reporting System ("ACARS") data packages that include a gross weight value for an aircraft;
   generating a first fuel flow estimate based at least on a comparison of a plurality of gross weight values for the aircraft;
   generating training data based on the plurality of ACARS data packages;
   providing the training data as input to a machine learning model to generate a second fuel flow estimate;
   comparing the first and second fuel flow estimates to generate a fuel flow error value; and
   modifying the machine learning model to reduce the fuel flow error value.
20. The non-transient, computer-readable medium of clause 19, the operations further including, after modifying the machine learning model to reduce the fuel flow error value, providing the training data as input to the machine learning model to generate a third fuel flow estimate.

## Claims

1. A system (100) comprising:
a memory (108) configured to store instructions (112); and
one or more processors (106) configured to:
receive a plurality of Aircraft Communication Addressing and Reporting System, ACARS, data packages (110) that include a gross weight value for an aircraft (104);
generate a first fuel flow estimate (116) based at least on a comparison of a plurality of gross weight values (114) for the aircraft;
generate training data (118) based on the plurality of ACARS data packages;
provide the training data as input to a machine learning model (120) to generate a second fuel flow estimate (122);
compare the first and second fuel flow estimates to generate a fuel flow error value (124); and
modify the machine learning model to reduce the fuel flow error value.

2. The system of claim 1, wherein the machine learning model is a neural network.

3. The system of claim 2, wherein the one or more processors are configured to modify the machine learning model by modifying a network weight associated with one or more nodes of the neural network.

4. The system of any preceding claim, wherein one or more processors are configured to modify the machine learning model by back propagation.

5. The system of any preceding claim, wherein the one or more processors are further configured to, after modifying the machine learning model to reduce the fuel flow error value, provide the training data as input to the machine learning model to generate a third fuel flow estimate.

6. The system of claim 5, wherein the one or more processors are further configured to generate one or more aircraft traffic management parameters based at least on the third fuel flow estimate.

7. The system of claim 5 or claim 6, wherein the one or more processors are further configured to generate one or more fuel planning parameters based at least on the third fuel flow estimate.

8. The system of any of claims 5 to 7, wherein the one or more processors are further configured to generate one or more aircraft maintenance parameters based at least on the third fuel flow estimate.

9. The system of any preceding claim, wherein the machine learning model is tail-specific.

10. The system of any preceding claim, wherein the ACARS data package comprises flight time data, altitude data, temperature data, location data, or a combination thereof.

11. The system of any preceding claim, wherein one or more processors are configured to generate training data by removing an ACARS data package from the training data if the ACARS data package does not include a data set required for the training data.

12. The system of any preceding claim, wherein one or more processors are further configured to receive a superset of ACARS data packages and determining whether each of the superset of ACARS data packages includes the gross weight value.

13. The system of any preceding claim, wherein the ACARS data packages do not include fuel flow data.

14. A method (200) comprising:
receiving (202) a plurality of Aircraft Communication Addressing and Reporting System, ACARS, data packages (110) that include a gross weight value for an aircraft (104);
generating (204) a first fuel flow estimate (116) based at least on a comparison of a plurality of gross weight values (114) for the aircraft;
generating (206) training data (118) based on the plurality of ACARS data packages;
providing (208) the training data as input to a machine learning model (120) to generate a second fuel flow estimate (122);
comparing (210) the first and second fuel flow estimates to generate a fuel flow error value (124); and
modifying (212) the machine learning model to reduce the fuel flow error value.

15. A computer-readable medium (108, 334) storing instructions (112, 336) executable by one or more processors (106, 320) to perform operations that include:
receiving (202) a plurality of Aircraft Communication Addressing and Reporting System, ACARS, data packages (110) that include a gross weight value for an aircraft (104);
generating (204) a first fuel flow estimate (116) based at least on a comparison of a plurality of gross weight values (114) for the aircraft;
generating (206) training data (118) based on the plurality of ACARS data packages;
providing (208) the training data as input to a machine learning model (120) to generate a second fuel flow estimate (122);
comparing (210) the first and second fuel flow estimates to generate a fuel flow error value (124); and
modifying (212) the machine learning model to reduce the fuel flow error value.
